# EUROPEAN PATENT APPLICATION

(11) **EP 4 390 810 A1**
(43) Date of publication of application: **26.06.2024**
(21) Application number: 22858162.5
(22) Date of filing: 20.06.2022
(51) Int. Cl.: G06Q 10/10, H04L 67/50

(54) **INFORMATION PROCESSING DEVICE, INFORMATION PROCESSING METHOD, AND INFORMATION PROCESSING PROGRAM**

(30) Priority: 18.08.2021 JP 2021133359
(71) Applicant: NTT Communications Corporation, Tokyo 100-8019 (JP)
(72) Inventor: KIRITOSHI, Keisuke, Tokyo 100-8019 (JP); ITO, Koji, Tokyo 100-8019 (JP); NAITO, Michihiro, Tokyo 100-8019 (JP); OGAWA, Michiaki, Tokyo 100-8019 (JP); TANNO, Ryosuke, Tokyo 100-8019 (JP); SAKAMOTO, Yuki, Tokyo 100-8019 (JP); OZAWA, Dan, Tokyo 100-8019 (JP)
(74) Representative: Hoffmann Eitle
(86) International application number: PCT/JP2022/024579
(87) International publication number: WO 2023/021838

(57) **Abstract**

An information processing device (100) includes a display control unit (152) that performs data processing on data that is input from a card corresponding to a connection source and that displays a graph that includes a plurality of cards each of which outputs a result of the associated data processing to a card corresponding to a connection destination and a notification unit (153) that notifies, when an input of a comment with respect to an area relevant to the graph that is displayed on the display control unit (152) has been received, a terminal device used by a user relevant to the graph of information on the input comment.

## Description

### Technical Field

The present invention relates to an information processing device, an information processing method, and an information processing program.

### Background Art

Measurement of time series data by installing a sensor in a system operated in a factory or the like and analysis of the time series data is used to aid in a cause of abnormality occurring in the system and development of the system. In general, data analysis is not completed by only an analyst who inputs the time series data to Artificial Intelligence (AI) and conducts an analysis, and is conducted by an expert and a decision making person while communicating with each other.

Although the expert does not have a special knowledge about AI, the expert has a detailed knowledge of the time series data itself that is measured by the sensor, and is an operator who operates the system while referring to the time series data and understands the issue related to the system. The decision making person corresponds to a factory director or the like, and makes various kinds of decisions about a change in configuration of the system, a change in control of the system by referring to the result of analysis of the data, or the like.

For example, data analysis is conducted by setting a meeting day or the like and communicating with each other by sending and receiving e-mails among the analyst, the expert, and the decision making person. In some cases, the analyst makes a report material in order to facilitate the understanding of the expert and the decision making person.

### Citation List

### Non Patent Literature

Non Patent Literature 1: "ReNom", online, URL: https://gridpredict.jp/our_services/renom/, searched on August 6, 2021
Non Patent Literature 2: "Neural Network Console", online, URL: https://dl.sony.com/ja/, searched on August 6, 2021

### Summary

### Technical Problem

However, with the conventional technology described above, there is a problem in that it is not possible to easily share information on the data analysis among a plurality of users.

For example, in order to conduct an efficient and correct data analysis, it is desirable to promptly share the information among the plurality of users, but it takes time and efforts to make the report material and set the meeting day, so that it is not possible to promptly share the information. Furthermore, if an existing chat tool and e-mails are used as the tools for sharing information among the users, it is not possible to communicate with each other while checking the content of the analysis, and thus, it is hard to convey an intention among each of the users.

Accordingly, the present invention has been conceived in light of the circumstances described above and an object thereof is to provide an information processing device, an information processing method, and an information processing program capable of easily sharing information on data analysis among a plurality of user.

### Solution to Problem

In order to solve the above-described problems and achieve the object, an information processing device includes: a display control unit that performs data processing on data that is input from a card corresponding to a connection source and that displays a graph that includes a plurality of cards each of which outputs a result of the associated data processing to a card corresponding to a connection destination; and a notification unit that notifies, when an input of a comment with respect to an area relevant to the graph that is displayed on the display control unit has been received, a terminal device used by a user relevant to the graph of information on the input comment.

### Advantageous Effects of Invention

According to the present invention, it is possible to easily share the information on the data analysis among the plurality of users.

### Brief Description of Drawings

FIG. 1 is a diagram illustrating one example of a system according to the present embodiment.
FIG. 2 is a diagram illustrating one example of canvas data.
FIG. 3 is a diagram illustrating a comment function.
FIG. 4 is a functional block diagram illustrating a configuration of an information processing device.
FIG. 5 is a diagram illustrating one example of a data structure of a user table.
FIG. 6 is a diagram illustrating one example of a data structure of a canvas table.
FIG. 7 is a diagram illustrating one example of a window displayed by a display control unit.
FIG. 8 is a flowchart illustrating the flow of a process performed by the information processing device according to the present embodiment.
FIG. 9 is a diagram illustrating one example of a computer that executes an information processing program.

### Description of Embodiments

Preferred embodiments of an information processing device, an information processing method, and an information processing program disclosed in the present invention will be described in detail below with reference to the accompanying drawings. In addition, the present invention is not limited by the embodiments.

### Embodiment

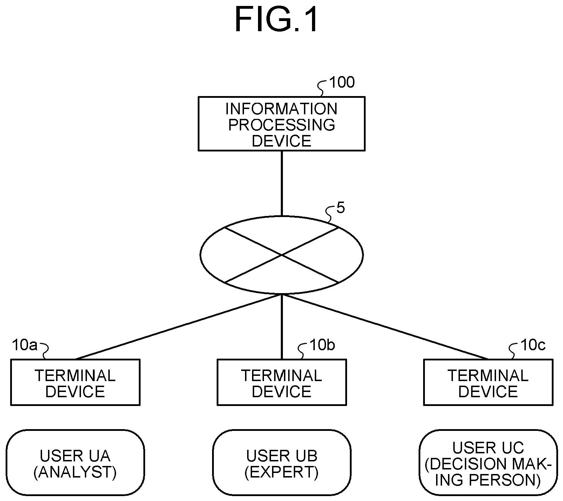

FIG. 1 is a diagram illustrating one example of a system according to the present embodiment. As illustrated in FIG. 1, this system includes an information processing device 100 and terminal devices 10a, 10b, and 10c. The information processing device 100 and the terminal devices 10a to 10c are connected via a network 5 with each other. The system may include another terminal device.

The terminal devices 10a to 10c are terminal devices that are used by various users, and correspond to a personal computer (PC), a notebook type PC, a tablet terminal, a smart phone, or the like. In the present embodiment, it is assumed that an analyst, an expert, and a decision making person are included in the users, but the persons included in the users are not limited to these persons.

The terminal device that is used by a user UA (analyst) is denoted by the terminal device 10a. The terminal device that is used by a user UB (expert) is denoted by the terminal device 10b. The terminal device that is used by a user UC (decision making person) is denoted by the terminal device 10c. In the description below, in the case where the terminal devices 10a to 10c are not particularly distinguished, the terminal devices 10a to 10c are collectively denoted by the "terminal device 10". Furthermore, in the case where the users UA to UC are not particularly distinguished, the users are collectively denoted by the "user".

The information processing device 100 has a function of a data analysis tool, such as Node-AI, or the like. The user UA operates the terminal device 10a, activates the data analysis tool included in the information processing device 100, and generates canvas data. The Node-AI adopts Flow-Based Programming in which a pipeline of a process with respect to data is able to be designed. In the Node-AI, by connecting pieces of data that are desired to be processed and a function that is able to perform each of the processes, it is possible to intuitively describe a pipeline of the process with respect to the data. In the present embodiment, the function that performs a predetermined process with respect to the data is denoted by a "card". Furthermore, data in which a pipeline is described is denoted by "canvas data".

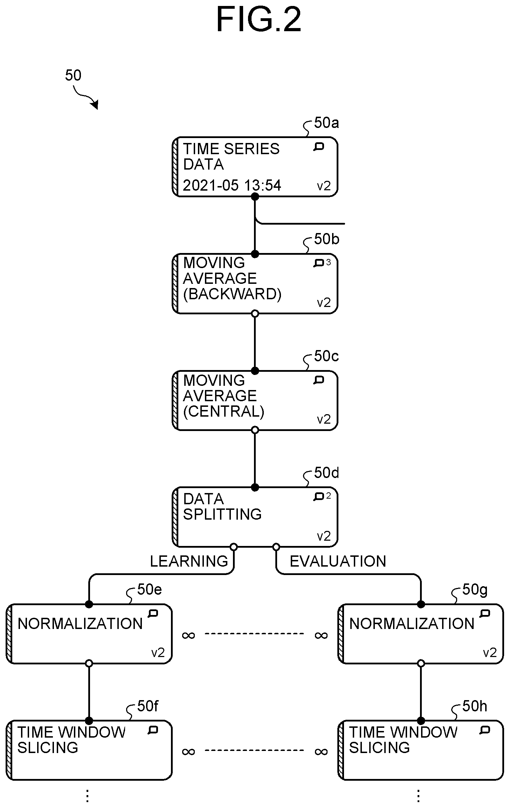

FIG. 2 is a diagram illustrating one example of the canvas data. In the example illustrated in FIG. 2, in canvas data 50, a plurality of cards 50a, 50b, 50c, 50d, 50e, 50f, 50g, and 50h are included and are connected with each other. Each of the cards 50a to 50h corresponds to the function that performs predetermined data processing. The information on the cards 50a to 50h that are connected each other corresponds to a "graph".

The card 50a is a card that assigns data corresponding to a processing target. The card 50b performs data processing (moving average (backward)) by using a processing result of the card 50a as an input, and outputs a processing result. The card 50c performs data processing (moving average (central)) by using a processing result of the card 50b as an input, and outputs a processing result.

The card 50d performs data splitting by using a processing result of the card 50b as an input, and outputs a processing result. The cards 50e and 50g performs data processing (normalization) by using a processing result of the card 50d as an input, and outputs a processing result.

The card 50f performs data processing (time window slicing) by using a processing result of the card 50e as an input, and outputs a processing result. The card 50h performs data processing (time window slicing) by using a processing result of the card 50e as an input, and outputs a processing result.

In the example illustrated in FIG. 2, in the canvas data 50, the cards 50a to 50h are indicated, but another card that performs another piece of data processing may be included. In the other data processing, the data processing related to a linear model, the data processing related to a machine learning model, the data processing that performs machine learning on each of the models, the data processing that evaluates the data, or the like is included.

For example, when the user UA operates the terminal device 10a and assigns the time series data to the card 50a, the time series data is input to the card 50b, and then, in each of the subsequent cards, the data processing that is unique to the cards is performed, and a data analysis is conducted on the time series data.

If the information processing device 100 receives an access from the terminal device 10 and receives a display request of the canvas data 50, the information processing device 100 causes the terminal device 10 corresponding to the request source to display the canvas data 50.

The information processing device 100 has a comment function, and, if the information processing device 100 receives an input of a comment with respect to one of the cards out of the cards 50a to 50h that are included in the canvas data 50, the information processing device 100 notifies the terminal device that is used by the user relevant to the canvas data 50 of the information on the input comment.

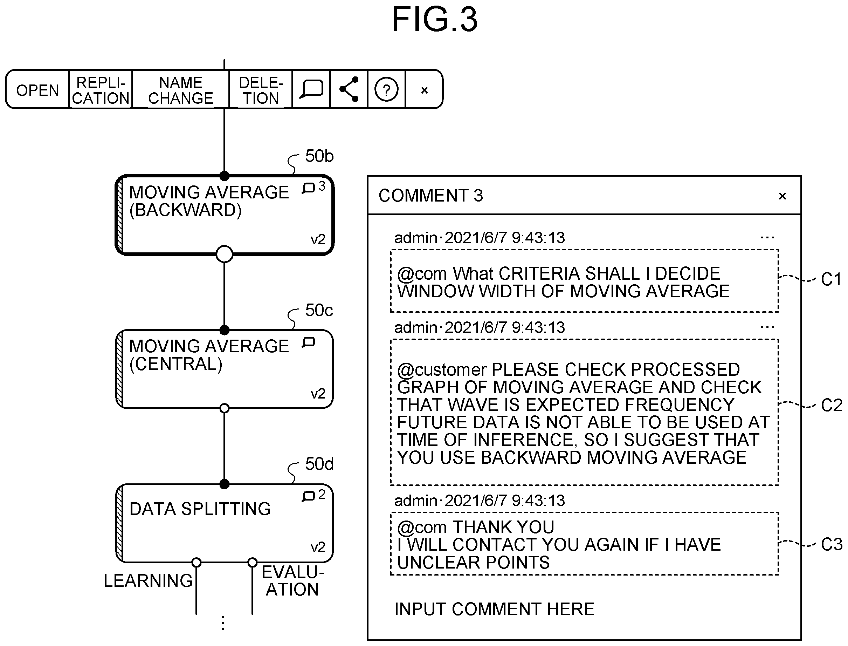

FIG. 3 is a diagram illustrating the comment function. The user who uses the terminal device 10 refers to the canvas data 50 by accessing the information processing device 100 and making a display request. The user assigns one of the cards 50a to 50h that are included in the canvas data 50, and inputs a comment. The example illustrated in FIG. 3 illustrates an example in which the user assigns the card 50b by operating the terminal device 10 and inputs a comment C1. Moreover, comments C2 and C3 were already input to the card 50b in the past, and the user is able to refer to the comments C2 and C3.

Here, a case has been described as an example in which the user assigns one of the cards included in the canvas data 50 and inputs the comment, but the example is not limited to this. It is also able to input a comment with respect to an area relevant to the canvas data 50. For example, the user may input a comment by assigning a space other than the card that is included in the canvas data 50, or may input a comment to a detailed screen, or the like that is displayed by selecting the card.

When the information processing device 100 newly receives an input of the comment C1 with respect to the card 50b, the information processing device 100 specifies the user relevant to the canvas data 50, and notifies the terminal device 10 that is used by the specified user of the comment data. For example, it is assumed that an input of the comment C1 with respect to the card 50b is received from the terminal device 10a that is used by the user UA, and it is assumed that the users relevant to the canvas data 50 are the users UA, UB, and UC. In this case, the information processing device 100 notifies the terminal devices 10a to 10c that are used by the respective users UA, UB, UC of the comment data of the comment C1. The information processing device 100 may exclude the terminal device 10a that is used by the user UA who has input the comment C1 from the notification destinations of the comment data.

In the comment data, in addition to the comment (text data on the comment), a Uniform Resource Locator (URL) of the card that corresponds to an input target for the comment is included. The URL indicates location information on the card in the canvas data 50. Moreover, in addition to the URL of the card, the comment data may include a URL that indicates an input location of the comment, or an URL that is used to be transitioned to a list of the comments.

For example, when the information processing device 100 newly receives an input of the comment C1 with respect to the card 50b, the information processing device 100 sets, in addition to the comment C1, the URL of the card 50b corresponding to the input target for the comment C1 to the comment data. When the information processing device 100 receives a selection of the URL of the card 50b from the user who operates the terminal device 10, the information processing device 100 causes the terminal device 10 to display the canvas data 50, and highlights the card 50b that has been selected from among the cards 50a to 50h. The information processing device 100 may highlight any way. For example, the information processing device 100 may display, from among the cards 50a to 50h, the card 50b corresponding to the selected URL by placing the card 50b in an area, such as the center of the display screen, that has been set in advance, or may highlight the card 50b by adding a color, a frame, or the like.

When the information processing device 100 receives a display request with respect to the canvas data 50, the information processing device 100 causes the terminal device 10 that has made the display request for the canvas data 50 to display the canvas data 50. When the information processing device 100 receives a selection of the card from the user who operates the terminal device 10, the information processing device 100 displays the comment that has been input to the card. For example, if the card 50b in which the comments C1, C2, and C3 are input is selected, the information processing device 100 displays, as illustrated in FIG. 3, the comments C1, C2, and C3 by associating the comments C1, C2, and C3 with the card 50b.

As described above, the information processing device 100 displays the canvas data 50 on the terminal device 10, and, if the information processing device 100 receives an input of the comment with respect to one of the cards out of the cards 50a to 50h that are included in the canvas data 50, the information processing device 100 notifies the terminal device 10 that is used by the user relevant to the canvas data 50 of the comment data related to the input comment. As a result of this, it is possible to easily share the information related to the data analysis among the plurality of users. Furthermore, a number of pre-settings of a meeting and a cost of generating reference materials are reduced, and a feedback loop is accelerated.

The information processing device 100 displays, on the terminal device 10, the canvas data 50 (pipeline) in which the flow of the data processing is able to understand even if a user is other than the analyst, so that it is possible to allow an expert and a decision making person to promote an understanding. It is possible to use the canvas data 50 itself as a report material.

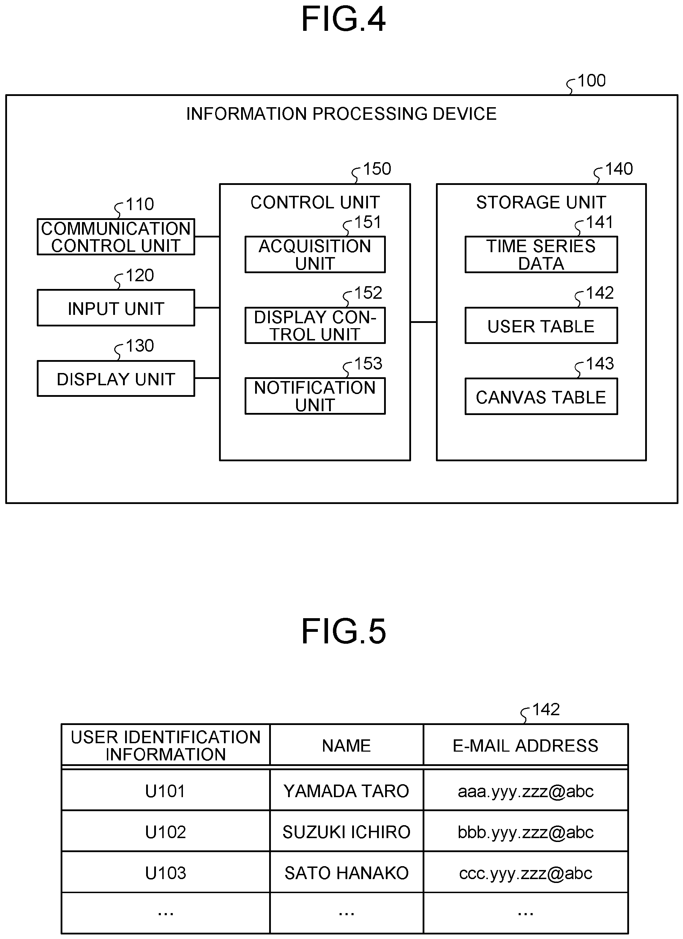

In the following, one example of a configuration of the information processing device 100 illustrated in FIG. 1 will be described. FIG. 4 is a functional block diagram illustrating the configuration of the information processing device. As illustrated in FIG. 4, the information processing device 100 includes a communication control unit 110, an input unit 120, a display unit 130, a storage unit 140, and a control unit 150.

The communication control unit 110 is implemented by a network interface card (NIC), and controls communication between the external terminal device 10 and the control unit 150 via a telecommunication line (the network 5), such as a local area network (LAN) or the Internet. The communication control unit 110 may communicate with another device that is installed outside.

The input unit 120 is implemented by using an input device, such as a keyboard or a mouse, and inputs various kinds of assignment information, such as a start of a process to be performed on the control unit 150, in response to an input operation performed by an operator.

The display unit 130 is an output device that outputs the information acquired from the control unit 150, and is implemented by a display device, such as a liquid crystal display, a print device, such as a printer, or the like.

The storage unit 140 includes time series data 141, a user table 142, and a canvas table 143. The storage unit 140 is implemented by a semiconductor memory device, such as a random access memory (RAM) or a flash memory, or, a storage device, such as a hard disk or an optical disk.

The time series data 141 is data that is obtained by estimating the cause-and-effect relationship between pieces of data, for each predetermined time, on the basis of sensor data or the like collected from a factory or the like. The time series data 141 is subjected to a predetermined process corresponding to the subsequent cards by being assigned as the data that is to be input to the card 50a included in the canvas data 50 described in FIG. 2, and a data analysis is conducted.

The user table 142 is a table that stores therein various kinds of data related to the user. FIG. 5 is a diagram illustrating one example of a data structure of the user table. As illustrated in FIG. 5, the user table 142 stores therein, in an associated manner, user identification information, a name, and an e-mail address. In the present embodiment, a case in which notification is sent by using an e-mail will be described, but the case is not limited to this. It may be possible to send a notification by using a chat tool, a short message service (SMS), or the like.

The user identification information is information for uniquely identifying a user. The name is a name of a user. The e-mail address is an e-mail address that is allocated to a user identified by the user identification information.

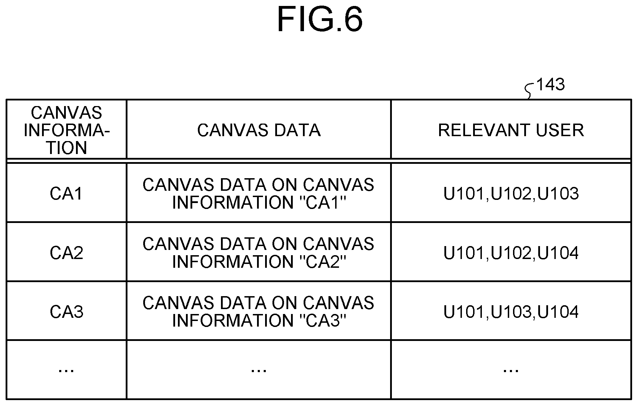

The canvas table 143 is a table that stores therein the canvas data and the data on the user relevant to the canvas data. FIG. 6 is a diagram illustrating one example of a data structure of the canvas table. As illustrated in FIG. 6, the canvas table 143 stores therein, in an associated manner, the canvas identification information, the canvas data, and a relevant user.

The canvas identification information is information for uniquely identifying the canvas data. The canvas data corresponds to the canvas data 50 explained in FIG. 2, and in which data on a plurality of cards are included. In each of the cards, a function program for executing the data processing and a parameter for the function are set. The parameter may be appropriately changed by the user.

Moreover, as explained in FIG. 3, when a comment with respect to the card is input, the comment is registered by being associated with the card. An URL is set to each of the cards that are included in the canvas data, and it is assumed that each of the cards is able to be uniquely identified. In the relevant user, the user identification information on the user relevant to the canvas data (having access authority) is included. Although not illustrated, it is assumed that, regarding the comment that has been input to the card included in the canvas data, a flag indicating whether or not a comment has been referred to is set to each of the pieces of user identification information on the relevant user.

A description will be given here by referring back to FIG. 4. The control unit 150 includes an acquisition unit 151, a display control unit 152, and a notification unit 153. The control unit 150 corresponds to a central processing unit (CPU), or the like.

The acquisition unit 151 acquires various kinds of data. For example, when the acquisition unit 151 acquires the time series data 141 from an external device or the like, the acquisition unit 151 registers the acquired time series data 141
to the storage unit 140. Moreover, the user UB (expert) may operate the terminal device 10b and send the time series data 141 to the information processing device 100. Furthermore, the acquisition unit 151 may acquire the data related to the user table 142 and the data related to the canvas table 143 and update the user table 142 and the canvas table 143.

In the case where the display control unit 152 receives data on a display request from the terminal device 10, the display control unit 152 causes the terminal device 10 that corresponds to the request source to display the corresponding canvas data. In a description below, the data on the display request is referred to as "display request data". In the data on the display request,
the identification information and the canvas identification information are included.

For example, the display control unit 152 refers to the canvas table 143, specifies the relevant user corresponding to the canvas identification information, and determines whether or not the user identification information on the display request data is included in the specified relevant user. If the user identification information on the display request data is included in the relevant user, the display control unit 152 causes the terminal device 10 that corresponds to the transmission source of the display request data to display the canvas data corresponding to the canvas identification information.

The display control unit 152 receives an assignment of the card that is included in the canvas data while causing the terminal device 10 to display the canvas data, and, if a comment is input, the display control unit 152 causes the terminal device 10 to display the assigned comment in a state in which the assigned comment is associated with the assigned card.

For example, if the display control unit 152 receives the display request data related to the canvas identification information that is used to identify the canvas data 50 illustrated in FIG. 2 from the terminal device 10, the display control unit 152 causes the terminal device 10 to display the canvas data 50. Furthermore, if the display control unit 152 receives an assignment of the card 50b and receives an input of the comment C1, the display control unit 152 associates the card 50b with the comment C1, and registers the card 50b and the comment C1 to the canvas data 50.

The display control unit 152 displays the canvas data 50 on the terminal device 10 and receives a selection of any one of the cards, and, if the comment has been registered in one of the selected card, the display control unit 152 causes the terminal device 10 to display the registered comment onto the card. For example, if the card 50b included in the canvas data 50 has been selected and the comments C1, C2, and C3 has been registered by being associated with the card 50b, the display control unit 152 causes the comments C1, C2, and C3 to be displayed, as described in FIG. 3.

The display control unit 152 sets, to each of the pieces of user identification information on the basis of the user identification information included in the display request data, a flag indicating whether or not each of the comments is referred to. When the display control unit 152 causes the terminal device 10 to display the canvas data 50, the display control unit 152 displays information indicating whether or not there is a comment that has not been referred to on the basis of the flag of each of the comment corresponding to the user identification information. Among the users relevant to the canvas data 50, the display control unit 152 may visually display the user identification information on the user who has accessed the comment and the user identification information on the user who has not accessed the comment.

When the display control unit 152 receives a selection of the URL of the card from the user who operates the terminal device 10, the display control unit 152 causes the terminal device 10 to display the canvas data 50, and highlights the card corresponding to the URL.

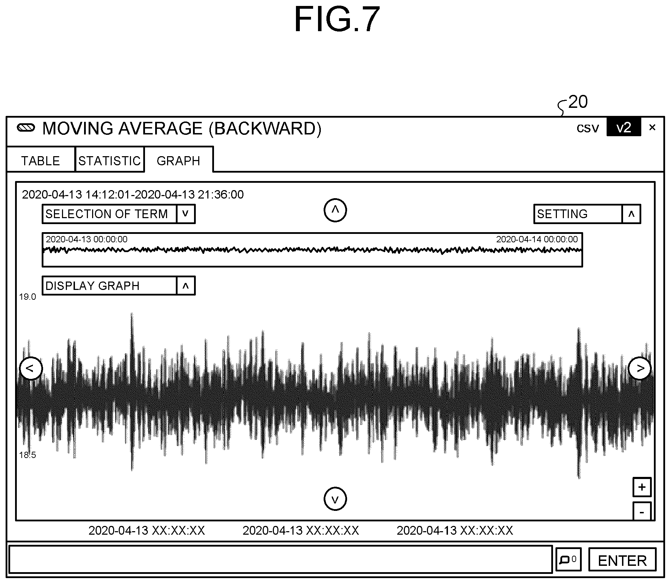

Moreover, when the display control unit 152 causes the terminal device 10 to display the canvas data 50 and receives a selection of one of the card, the display control unit 152 may display the parameter that has been set to the card, the data that has been input to the card, and the data corresponding to the processing result of the card. For example, when the display control unit 152 receives a display request for the data on the card 50b, the display control unit 152 displays a window 20 illustrated in FIG. 7.

FIG. 7 is a diagram illustrating one example of a window that is displayed by the display control unit. In the example illustrated in FIG. 7, a graph in which the vertical axis indicates a value of data and the horizontal axis indicates the date and time is displayed on the window 20. By displaying the window 20, the user is able to check various kinds of data by the Node-AI, so that it is possible to easily have a detailed discussion.

When the notification unit 153 receives an input of a comment with respect to the card included in the canvas data 50 in cooperation with the display control unit 152, the notification unit 153 notifies the terminal device 10 of the comment data. The process performed by the notification unit 153 will be described with reference to FIG. 3. When the notification unit 153 newly receives an input of the comment C1 with respect to the card 50b, the notification unit 153 specifies the user identification information that is relevant to the canvas data 50 on the basis of the canvas identification information included in the canvas data 50 and the canvas table 143.

The notification unit 153 specifies the e-mail address corresponding to the user identification information on the basis of the specified user identification information and the user table 142. The notification unit 153 notifies the comment data to the specified e-mail address as the transmission destination. The notification unit 153 may set the URL of the card in which the comment has been input as comment data.

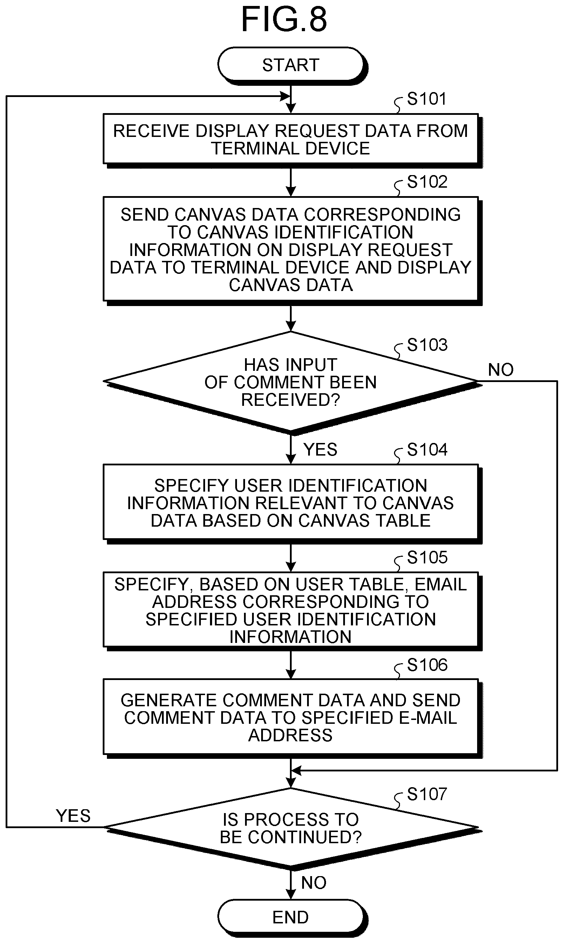

In the following, one example of the flow of a process performed by the information processing device 100 according to the present embodiment will be described. FIG. 8 is a flowchart illustrating the flow of the process performed by the information processing device according to the present embodiment. As illustrated in FIG. 8, the display control unit 152 included in the information processing device 100 receives the display request data from the terminal device 10 (Step S101).

The display control unit 152 sends the canvas data corresponding to the canvas identification information on the display request data to the terminal device and causes the terminal device to display the canvas data (Step S102). If the display control unit 152 does not receive an input of the comment from the terminal device 10 (No at Step S103), the display control unit 152 proceeds to Step S107. If the display control unit 152 receives an input of the comment from the terminal device 10 (Yes at Step S103), the display control unit 152 proceeds to Step S104.

The notification unit 153 included in the information processing device 100 specifies the user identification information that is relevant to the canvas data on the basis of the canvas table 143 (Step S104). The notification unit 153 specifies, on the basis of the user table 142, the e-mail address corresponding to the specified user identification information (Step S105).

The notification unit 153 generates the comment data, and sends the comment data to the specified e-mail address (Step S106) .

If the information processing device 100 continues the process (Yes at Step S107), the information processing device 100 proceeds to Step S101. If the information processing device 100 does not continue the process (No at Step S107), the information processing device 100 ends the process.

As described above, in the case where the information processing device 100 according to the present embodiment displays the canvas data 50 on the terminal device 10, and receives an input of the comment with respect to one of the cards out of the plurality of cards that are included in the canvas data 50, the information processing device 100 notifies the terminal device 10 of the user relevant to the canvas data 50 of the comment data that is related to the input comment. As a result of this, it is possible to easily share the information related to the data analysis with the plurality of users.

The information processing device 100 sets an URL (location information) of the card to the comment data, and notifies the terminal device 10 of the URL. As a result of this, it is possible to easily specify the card in which the comment has been input.

If the information processing device 100 receives an assignment of the card, the information processing device 100 displays the data that is input to the card and the data that indicates the result of the data processing of the card. As a result of this, it is possible to easily check both of the data that has not been input to the card and the data that has been subjected to each of the pieces of data processing.

The information processing device 100 specifies the user who has accessed the comment included in the canvas data 50, and further displays both of the user identification information on the user who has accessed the comment and the user identification information on the user who has not accessed the comment. As a result of this, it is possible to easily specify a reference status of the comment related to the relevant user.

Incidentally, the above described content of the process performed by the information processing device 100 is one example, and the information processing device 100 may further perform another process. In the following, the other processes (1) and (2) performed by the information processing device 100 will be described.

The other process (1) performed by the information processing device 100 will be described. In the above, the display control unit 152 included in the information processing device 100 displays the canvas data 50, and displays, if the card that is included in the canvas data 50 has been selected, the comment that is input to the selected card; however, the process is not limited to this. When the display control unit 152 receives all of the comment display requests from the terminal device 10, the display control unit 152 displays a list of comments that have been set to the cards that are included in the canvas data 50. The display control unit 152 displays the list of the comments, and provides a keyword search function. For example, if a predetermined keyword is assigned, the display control unit 152 scans a keyword of each of the comments that are displayed as a list, searches for the assigned keyword, and displays the search result. As a result of this, the user is easily refers to the comment.

The other process (2) performed by the information processing device 100 will be described. The display control unit 152 included in the information processing device 100 may count the number of accesses related to each of the comments from the terminal device 10, and may further display the number of accesses for each comment. As a result of this, it is possible to understand whether or not a discussion of the project corresponding to the canvas data 50 proceeds. For example, the card that is frequently accessed indicates that the discussion is frequently held among the plurality of users. Moreover, in addition to the number of accesses for each comment, the information processing device 100 may calculate the number of reactions related to the comment, the number of comments per single card, information on thread participants, or the like as statistic related to the comment and display the calculated result. The reaction indicated here includes "That's nice" with respect to the comment, a stamp of a chat tool, or the like.

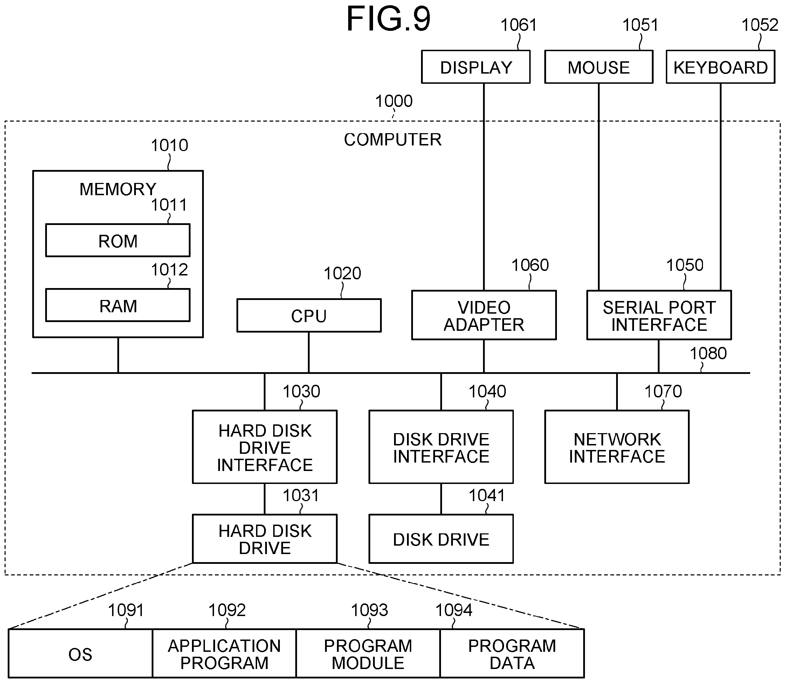

Subsequently, one example of a computer that executes an information processing program will be described. FIG. 9 is a diagram illustrating one example of the computer that executes the information processing program. A computer 1000 includes, for example, a memory 1010, a CPU 1020, a hard disk drive interface 1030, a disk drive interface 1040, a serial port interface 1050, a video adapter 1060, and a network interface 1070. Each of the units is connected by a bus 1080.

The memory 1010 includes a read only memory (ROM) 1011 and a RAM 1012. The ROM 1011 stores therein, for example, a boot program, such as a basic input output system (BIOS). The hard disk drive interface 1030 is connected to a hard disk drive 1031. The disk drive interface 1040 is connected to a disk drive 1041. For example, a detachable storage medium, such as a magnetic disk or an optical disk, is inserted into the disk drive 1041. For example, a mouse 1051 and a keyboard 1052 are connected to the serial port interface 1050. For example, a display 1061 is connected to the video adapter 1060.

Here, the hard disk drive 1031 stores therein, for example, an Operating System (OS) 1091, an application program 1092, a program module 1093, and a program data 1094. Each of the pieces of information described above in the embodiment is stored in, for example, the hard disk drive 1031 or the memory 1010.

In addition, the information processing program is stored in, for example, the hard disk drive 1031 as the program module 1093 in which a command executed by the computer 1000 has been described. Specifically, the program module 1093 in which each of the processes performed by the information processing device 100 described above in the embodiment is stored in the hard disk drive 1031.

In addition, the data that is used by the information process executed by the information processing program is stored in, for example, the hard disk drive 1031 as the program data 1094. Then, the CPU 1020 reads the program module 1093 or the program data 1094 stored in the hard disk drive 1031 as needed into the RAM 1012 and executes each of the processing procedures described above.

In addition, the program module 1093 or the program data 1094 according to the information processing program may be stored in, for example, a detachable storage medium as well as being stored in the hard disk drive 1031, and then may be read out by the CPU 1020 via the disk drive 1041. Alternatively, the program module 1093 or the program data 1094 according to the information processing program may be stored in another computer that is connected via a network, such as a LAN or a wide area network (WAN), and then may be read out by the CPU 1020 via the network interface 1070.

In the above, although the embodiment in which the present invention provided by the present invention has been applied has been described, the present invention is not limited by the descriptions and the drawings constituting a part of the disclosure of the present invention described in the present embodiment. In other words, all of another embodiment, an example of the embodiment, an operational technology, and the like provided by a person skilled in the art based on the present embodiment belong to the category of the present invention. Reference Signs List

- 100: information processing device
- 110: communication control unit
- 120: input unit
- 130: display unit
- 140: storage unit
- 141: time series data
- 142: user table
- 143: canvas table
- 150: control unit
- 151: acquisition unit
- 152: display control unit
- 153: notification unit

## Claims

1. An information processing device comprising:
a display control unit that performs data processing on data that is input from a card corresponding to a connection source and that displays a graph that includes a plurality of cards each of which outputs a result of the associated data processing to a card corresponding to a connection destination; and
a notification unit that notifies, when an input of a comment with respect to an area relevant to the graph that is displayed on the display control unit has been received, a terminal device used by a user relevant to the graph of information on the input comment.

2. The information processing device according to claim 1, wherein, when the notification unit receives an input of a comment with respect to one of the plurality of cards that are included in the graph displayed on the display control unit, the notification unit further notifies the terminal device used by the user relevant to the graph of the information on the input comment and location information on the card that corresponds to an input target of the comment.

3. The information processing device according to claim 1, wherein, when the display control unit receives an assignment of a card, the display control unit further performs a process of displaying the data that is input to the assigned card, or, a result of data processing performed on the assigned card.

4. The information processing device according to claim 1, wherein the display control unit specifies, based on an access result of an access to the comment received from the terminal device used by the user relevant to the graph, the user who has accessed the comment, and further displays information on the user who has accessed the comment and information on a user who has not accessed the comment.

5. The information processing device according to claim 1, wherein the display control unit calculates statistic relevant to the comment, and further displays the statistic.

6. An information processing method comprising:
a display controlling step of performing data processing on data that is input from a card corresponding to a connection source and displaying a graph that includes a plurality of cards each of which outputs a result of the associated data processing to a card corresponding to a connection destination; and
a notifying step of notifying, when an input of a comment with respect to an area relevant to the graph that is displayed at the display controlling step has been received, a terminal device used by a user relevant to the graph of information on the input comment.

7. An information processing program that causes a computer to execute a process comprising:
a display controlling step of performing data processing on data that is input from a card corresponding to a connection source and displaying a graph that includes a plurality of cards each of which outputs a result of the associated data processing to a card corresponding to a connection destination; and
a notifying step of notifying, when an input of a comment with respect to an area relevant to the graph that is displayed at the display controlling step has been received, a terminal device used by a user relevant to the graph of information on the input comment.
